Europäisches Patentamt

European Patent Office

Office européen des brevets

(19)

(11) **EP 1 679 709 A1**

(12) **EUROPEAN PATENT APPLICATION**
published in accordance with Art. 158(3) EPC

(43) Date of publication:
**12.07.2006 Bulletin 2006/28**

(51) Int Cl.:
*G11B 20/18* (1985.01)      *G11B 7/0045* (2000.01)

(21) Application number: **04799444.7**

(22) Date of filing: **01.11.2004**

(86) International application number:
**PCT/JP2004/016238**

(87) International publication number:
**WO 2005/043537 (12.05.2005 Gazette 2005/19)**

(84) Designated Contracting States:
**DE FR GB**

(30) Priority: **31.10.2003 JP 2003372478**

(71) Applicant: **MATSUSHITA ELECTRIC INDUSTRIAL CO., LTD.**
**Kadoma-shi, Osaka 571-8501 (JP)**

(72) Inventors:
• **SHOJI, Mamoru**
**Osaka 571-8501 (JP)**

• **MIYASHITA, Harumitsu**
**Osaka 571-8501 (JP)**
• **KOBAYASHI, Isao**
**Osaka 571-8501 (JP)**
• **SATO, Takahiro**
**Osaka 571-8501 (JP)**

(74) Representative: **Pautex Schneider, Nicole Véronique et al**
**Novagraaf International SA**
**25, Avenue du Pailly**
**1220 Les Avanchets - Geneva (CH)**

(54) **RECORDING METHOD, RECORDING APPARATUS, PROGRAM AND RECORDING CONTROL APPARATUS**

(57)    The present invention provides a recording method for recording information on a recording medium under one recording condition of a plurality of recording conditions. The recording method includes the steps of: (a) recording a plurality of test information on the recording medium under the plurality of recording conditions; and (b) recording the information on the recording medium under one recording condition of the plurality of recording conditions, wherein the step (b) includes: the step of (b-1) calculating differences between each of a plurality of test signals obtained by reproducing the plurality of test information recorded on the recording medium and at least one desired signal; and (b-2) selecting one recording condition of the plurality of recording conditions by referring to the calculated differences.

FIG.4

EP 1 679 709 A1

**Description**

TECHNICAL FIELD

The present invention relates to a recording method for recording information on a recording medium under one recording condition of a plurality of recording conditions, a recording apparatus, a program and a recording control apparatus.

BACKGROUND ART

An optical disc apparatus records digital information on an optical disc by irradiating the optical disc with a laser beam. Because of individual differences among the optical disc apparatuses and among the optical discs, the quality of signals recorded on the optical discs might be reduced. In order to avoid the reduction of the quality of signals due to such individual differences, one method is, for example, to test-record signals when an optical disc is mounted on an optical disc apparatus. Another method is, for example, to optimize an irradiation power and a light pulse shape.

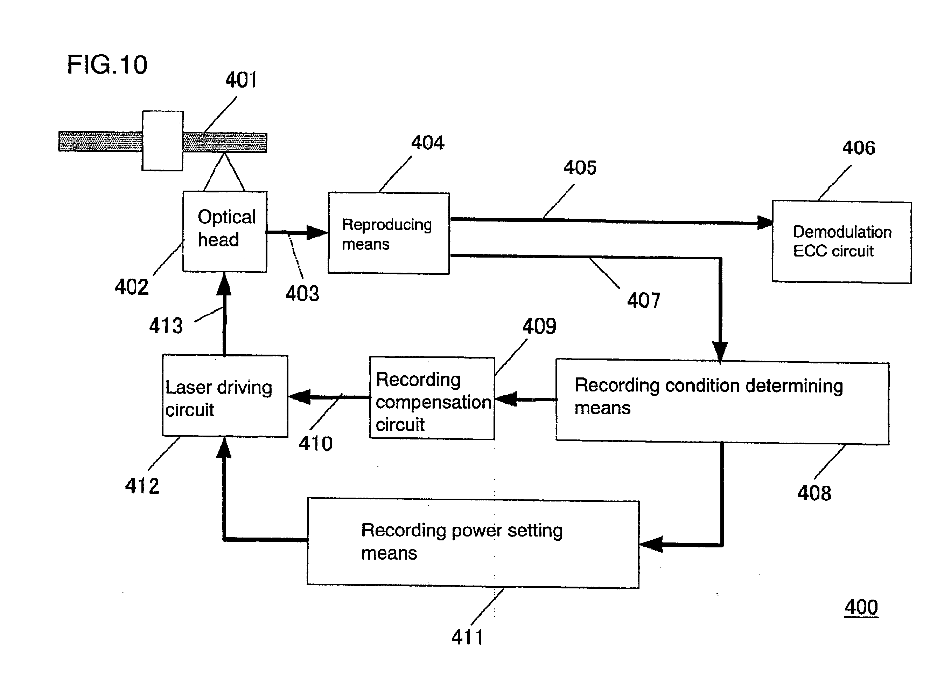

Figure **10** is a drawing for showing the configuration of a conventional optical disc apparatus **400.**

The optical disc apparatus **400** is configured so that an optical disc **401** can be mounted thereon. The optical disc apparatus **400** includes an optical head **402**, a reproducing means **404,** a demodulation ECC circuit **406,** a recording condition determining means **408,** a recording compensation circuit **409,** a laser driving circuit **412,** and a recording power setting means **411.**

The recording condition determining means **408** determines a recording pulse position and a recording power. The recording compensation circuit **409** sets the recording pulse position according to the determination of the recording condition determining means **408**. The recording power setting means **411** sets the recording power according to the recording condition determining means **408**. The laser driving circuit **412** controls the optical head **402** so that the optical head **402** performs a predetermined test-recording on the optical disc **401.**

When the test-recording is finished, the laser driving circuit **412** controls the optical head **402** so that the optical head **402** reproduces the signals recorded on the optical disc **401.** Reproduction signals **403** are input to the reproducing means **404.**

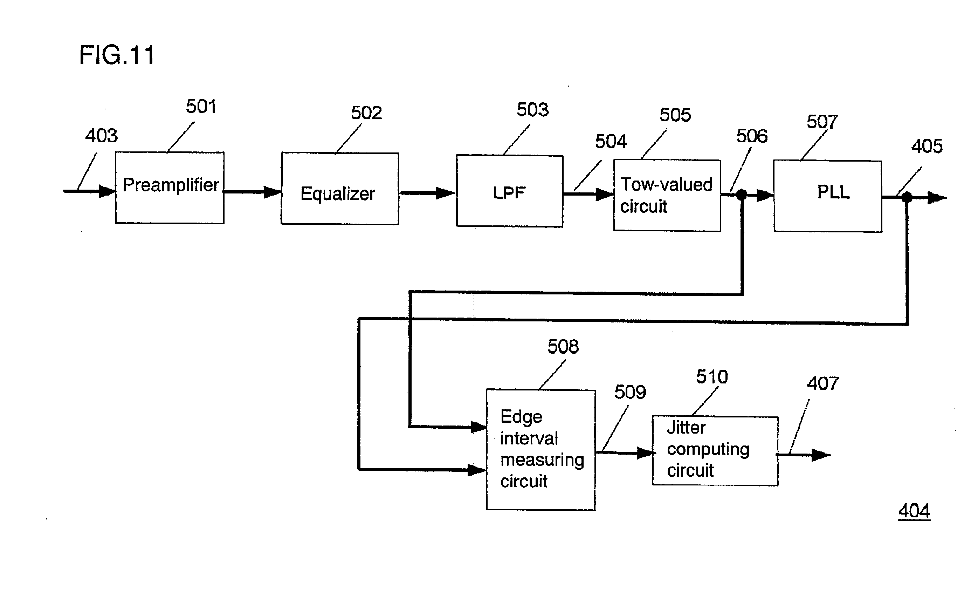

Figure **11** is a drawing for showing the configuration of the reproducing means **404**.

The reproducing means **404** includes a preamplifier **501,** an equalizer **502,** a low pass filter **503,** a two-valued circuit **505,** a Phase Locked Loop (PLL) **507,** an edge interval measuring circuit **508,** and a jitter computing circuit **510.**

The preamplifier **501** amplifies the reproduction signals **403**. The equalizer **502** and the low pass filter **503** generate a signal **504** by equalizing the waveform of the reproduction signals **403** which have been amplified. The two-valued circuit **505** generates a pulse signal **506** based on the signal **504** and a slice level. Typically, the two-valued circuit **505** operates with a slice level being in a bandwidth of tens of KHz so that an integration value of a mark is equal to an integration value of a space. The pulse signal **506** is input to the PLL **507**.

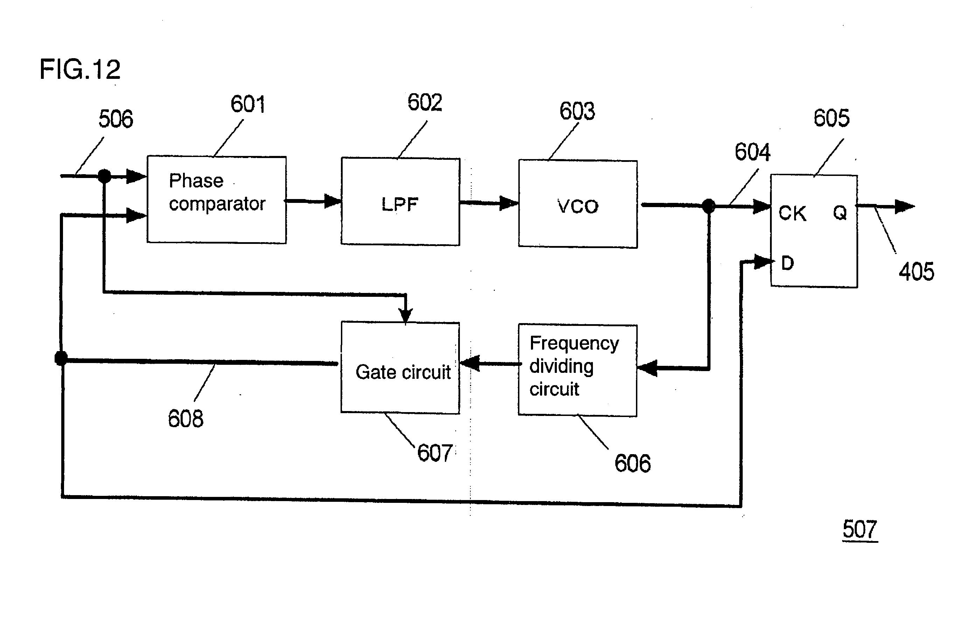

Figure **12** is a drawing for showing the configuration of the PLL **507**.

The PLL 507 includes a phase comparator **601,** a low pass filter **602,** a VCO **603,** a flip-flop **605,** a frequency dividing circuit **606,** and a gate circuit **607.**

The phase comparator **601** detects a difference between the phase of the pulse signal **506** and the phase of the signal **608** output from the gate circuit **607**. The phase comparator **601** generates an error signal indicating a phase difference and a frequency difference between the pulse signal **506** and the signal **608.**

The low pass filter **602** passes through the low frequency component of the error signal to generate a control signal indicating the control voltage of the VCO **603**. The VCO **603** generates a clock signal **604** based on the control voltage. The frequency dividing circuit **606** divides the frequency of the clock signal **604.** The gate circuit **607** generates the signal **608** based on the clock signal **604** of which the frequency has been divided. The VCO **603** is controlled so that the phases of the two signals (i.e. the pulse signal **506** and the signal **608)** input to the phase comparator **602** are identical to each other. Thus, the PLL **507** generates a signal **405** based on the pulse signal **506.**

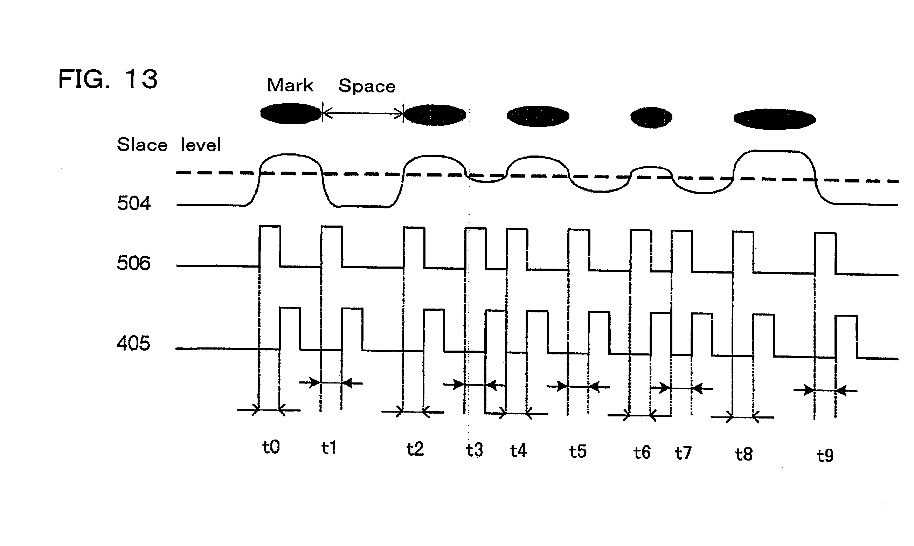

When the pulse signal **506** output from the two-valued circuit **505** and the signal **405** output from the flip-flop 605 are input to the edge interval measuring circuit **508,** the edge interval measuring circuit **508** measures the edge intervals of the two pulses, t0, t1, t2, t3, t4, t5, t6, t7, t8, t9,..., and outputs a signal **509** indicating the edge intervals to the jitter computing circuit **510** (see Figure 13).

The jitter computing circuit **510** integrates the edge intervals.

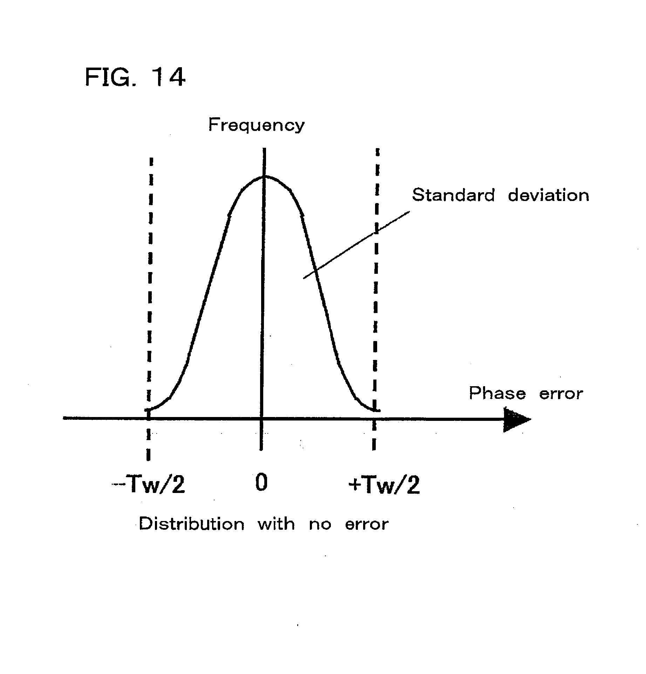

Figure **14** is a drawing for showing distribution of the edge intervals. The jitter computing circuit **510** calculates, for example, a standard deviation based on the distribution of the edge intervals, and outputs a signal **407** indicating the calculation result to the recording condition determining means **408**. The recording condition determining means **408** searches for an optimum recording condition based on the signal **407.**

Reference: Japanese Laid-Open Publication No. 2000-200418

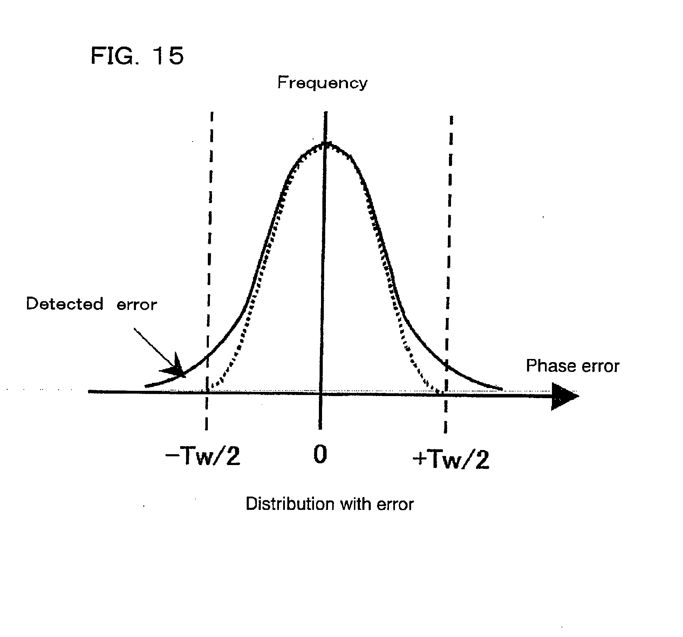

In the case where the shortest mark length of the recorded data is extremely short, however, part of the distribution of the edge intervals sometimes exceeds the width of the window because of, for example, intex-symbol interference (see Figure 15). Even in such a case, the portion that deviates from the normal distribution is extremely small considering the total number as a whole. Since the dominant element of a standard deviation is the central portion of the distribution, the increase in the jitter is small. In actuality, however, an error occurs because the distribution has exceeded the width of the window. Thus, the probability of error occurrence has increased. In other words, even if the probability of error occurrence is different, the jitter may be the same. For this reason, it is sometimes difficult to estimate an accurate probability of error occurrence only from jitters.

In view of the problems described above, one purpose of the present invention is to provide a recording method for accurately recording data even if a shortest mark length is shorter than it has been conventionally.

DISCLOSURE OF THE INVENTION

The recording method of the present invention is for recording information on a recording medium under one recording condition of a plurality of recording conditions. The recording method includes the steps of: (a) recording a plurality of test information on the recording medium under the plurality of recording conditions; and (b) recording the information on the recording medium under one recording condition of the plurality of recording conditions, wherein the step (b) includes the steps of: (b-1) calculating differences between each of a plurality of test signals obtained by reproducing the plurality of test information recorded on the recording medium and at least one desired signal; and (b-2) selecting one recording condition of the plurality of recording conditions by referring to the calculated differences, thereby achieving the purpose described above.

The step (a) may include the steps of: (a-1) determining an initial condition; and (a-2) determining at least one recording condition based on the initial condition. The plurality of recording conditions include the initial condition and the determined at least one recording condition.

The step (b-1) may include the steps of: obtaining the plurality of test signals by reproducing the plurality of test information from the recording medium; performing a maximum likelihood decoding on the plurality of test signals to generate a plurality of two-valued signals indicating a result of the maximum likelihood decoding; and calculating a reliability of the result of the maximum likelihood decoding based on the plurality of test signals and the plurality of two-valued signals, and the step (b-2) may include the step of: selecting one recording condition of the plurality of recording conditions based on a plurality of values indicating the reliability.

The step (b-2) may include the step of: selecting a recording condition corresponding to a smallest value of the plurality of values indicating the reliability, among the plurality of recording conditions.

The step (b-1) may include the steps of: obtaining the plurality of test signals by reproducing the plurality of test information from the recording medium; generating a plurality of paths based on each of the plurality of test signals; and calculating a plurality of indexes indicating a reliability of the plurality of test signals based on each of the plurality of test signals and the plurality of paths, and the step (b-2) may include the step of: selecting one recording condition of the plurality of recording conditions based on the plurality of indexes.

The step (b-2) may include the step of: selecting a recording condition corresponding to a smallest value of the plurality of the indexes, among the plurality of recording conditions.

A priority order for being selected may be given to the plurality of recording conditions.

The step (b) may include the steps of: determining relative positions of a plurality of light pulses included in a light beam in accordance with the selected one recording condition; and forming a plurality of recording marks having predetermined lengths on the recording medium by irradiating the recording medium with the light beam.

The plurality of recording marks having the predetermined lengths may include a shortest recording mark.

The plurality of recording marks having the predetermined lengths may include a recording mark which is the second shortest .

The initial condition may be recorded on the recording medium when the recording medium is manufactured.

The recording method may further include the step of: determining a predetermined recording condition based on at least one of an edge shift amount and a jitter, wherein the predetermined recording condition is included in the plurality of recording conditions.

The step (a-1) may include the step of: determining the predetermined recording condition as the initial condition.

The recording apparatus of the present invention is for recording information on a recording medium under one recording condition of a plurality of recording conditions. The recording apparatus includes: a first recording means for recording a plurality of test information on the recording medium under the plurality of recording conditions; and a second recording means for recording the information on the recording medium under one recording condition of the plurality of recording conditions, wherein the second recording means includes: a calculating unit operable to calculate differences between each of a plurality of test signals obtained by reproducing the plurality of test information recorded on the recording medium and at least one desired signal; and a selecting unit operable to select one recording condition of the plurality of recording conditions by referring to the calculated differences, thereby achieving the purpose described above.

The program of the present invention is for having a computer execute a recording process for recording information on a recording medium under one recording condition of a plurality of recording conditions, wherein the recording process comprises the steps of: (a) recording a plurality of test information on the recording medium under the plurality of recording conditions; and (b) recording the information on the recording medium under one recording condition of the plurality of recording conditions, and the step (b) includes the steps of: (b-1) calculating differences between each of a plurality of test signals obtained by reproducing the plurality of test information recorded on the recording medium and at least one desired signal; and (b-2) selecting one recoding condition of the plurality of recording conditions by referring to the calculated differences, thereby achieving the purpose described above.

The recording control apparatus of the present invention is for recording information on a recording medium under one recording condition of a plurality of recording conditions. The recording control apparatus includes: a calculating unit operable to calculate differences between each of a plurality of test signals obtained by reproducing a plurality of test information recorded on the recording medium and at least one desired signal; and a selecting unit operable to select one recording condition of the plurality of recording conditions by referring to the calculated differences, thereby achieving the purpose described above.

According to the recording method, the recording apparatus, the program and the recording control apparatus of the present invention, differences are calculated between each of a plurality of test signals obtained by reproducing the plurality of test information and the desired signal, and one recording condition of the plurality of recording condition is selected. Thus, it is possible to record the information on the recording medium under a condition that is close to the condition for the desired signal by merely selecting one recording condition of the plurality of recording conditions, in order to make one recording condition comply with the condition for the desired signal. As a result, it is possible to optimize the recording parameters with a simple circuit configuration.

Further, according to the recording method of the present invention, a test recording is performed before user data is recorded so that the user data is recorded under a condition which makes the PRML error index M smaller. Accordingly, it is possible to perform the recording accurately even if the shortest mark length is short.

Furthermore, according to the recording method of the present invention, a test recording is performed before user data is recorded so that the user data is recorded under a condition which makes the PRML error index M smaller. Accordingly, it is possible to record the data accurately without being affected by variation in quality of optical discs and variation in quality of optical disc apparatuses.

BRIEF DESCRIPTION OF THE DRAWINGS

Figure **1** is a state transition diagram A showing state transition rules defined by a recording code having a minimum polarity reversal interval of 2 and an equalization system PR (1, 2, 2, 1).

Figure **2** is a trellis diagram which is obtained by extending the state transition diagram A along a time axis.

Figure **3** is a drawing for showing a distribution of Pa-Pb.

Figure **4** is a drawing for showing a configuration of an optical disc apparatus 100 according to an embodiment of the present invention.

Figure **5** is a drawing for showing a configuration of an optical disc **101.**

Figure **6** is a drawing for showing a waveform of a light beam irradiated by an optical head 102 when a recording is performed.

Figure **7** is a drawing for showing test signals recorded on an optical disc for optimizing a pulse position of a 3T mark.

Figure **8** is a drawing for describing a procedure for determining a plurality of conditions for optimizing a pulse position.

Figure **9** is a drawing for showing a configuration of a reproducing means **104.**

Figure **10** is a drawing for showing a configuration of a conventional optical disc apparatus **400.**

Figure **11** is a drawing for showing a configuration of a reproducing means **404.**

Figure **12** is a drawing for showing a configuration of a PLL **507.**

Figure **13** is a drawing for showing a signal generated by a plurality of constituent elements included in the reproducing means **404.**

Figure **14** is a drawing for showing distribution of edge intervals.

Figure **15** is another drawing for showing distribution of edge intervals.

| | |
|---|---|
| **100:** | OPTICAL DISC APPARATUS |
| **101:** | OPTICAL DISC |
| **102:** | OPTICAL HEAD |
| **104:** | REPRODUCING MEANS |
| **106:** | DEMODULATION ECC CIRCUIT |
| **108:** | RECORDING CONDITION DETERMINING MEANS |
| **109:** | RECORDING COMPENSATION CIRCUIT |
| **111:** | RECORDING POWER SETTING MEANS |
| **112:** | LASER DRIVING CIRCUIT |
| **201:** | PREAMPLIFIER |
| **202:** | HIGH PASS FILTER |
| **203:** | AGC CIRCUIT |
| **204:** | WAVEFORM EQUALIZER |
| **205:** | A/D CONVERTER |
| **206:** | SHAPE ADJUSTING UNIT |
| **207:** | MAXIMUM LIKELIHOOD DECODER |
| **208:** | RELIABILITY CALCULATION UNIT |

BEST MODE FOR CARRYING OUT THE INVENTION

Hereinafter, embodiments of the present invention will be described with reference to the drawings.

Firstly, a PRML error index M (hereinafter, simply referred to as "index M") which is referred to by an optical disc apparatus according to an embodiment of the present invention will be described (see "1. Regarding index M"). Secondly, the optical disc apparatus according to an embodiment of the present invention will be described in detail (see 2. "An optical disc apparatus according to an embodiment of the present invention").

1. Regarding index M

Index M for evaluating reproduction signals based on a maximum likelihood decoding method will be described. The maximum likelihood decoding method is generally known as a decoding method for determining a pattern of a waveform of reproduction signals by comparing the waveform of the reproduction signals with a waveform estimated in advance, and for decoding the reproduction signals based on the determination result.

The following discussion is based on an example in which the minimum polarity reversal interval of a recording code is 2, and the waveform of the signal is adjusted in shape so that the frequency characteristic of the signal is the PR (1, 2, 2, 1) equalization.

A recording code at a current time is expressed as $b_k$. A recording code at time before the current time by 1 (one) time unit is expressed as $b_{k-1}$. A recording code at time before the current time by 2 (two) time units is expressed as $b_{k-2}$. A recording code at time before the current time by 3 (three) time units is expressed as $b_{k-3}$. An ideal output value $Level_v$ of the PR (1, 2, 2, 1) equalization is expressed by the following expression.

$$Level_v = b_{k-3} + 2b_{k-2} + 2b_{k-1} + b_k$$

where k is an integer indicating time, and v is any integer from 0 to 6.

Table 1 is a state transition table in which a state at time k is expressed by S($b_{k-2}$, $b_{k-1}$, $b_k$).

Table 1: A state transition table defined by a constraint from the minimum polarity reversal interval being 2 and PR (1, 2, 2, 1):

| State at time k-1 S ($b_{k-3}$, $b_{k-2}$, $b_{k-1}$) | State at time k S ($b_{k-2}$, $b_{k-1}$, $b_k$). | $b_k$ /Level$_v$ |
|---|---|---|
| S (0, 0, 0) | S (0, 0, 0) | 0 / 0 |
| S (0, 0, 0) | S (0, 0, 1) | 1 / 1 |
| S (0, 0, 1) | S (0, 1, 1) | 1 / 3 |
| S (0, 1, 1) | S (1, 1, 0) | 0 / 4 |
| S (0, 1, 1) | S (1, 1, 1) | 1 / 5 |
| S (1, 0, 0) | S (0, 0, 0) | 0 / 1 |
| S (1, 0, 0) | S (0, 0, 1) | 1 / 2 |
| S (1, 1, 0) | S (1, 0, 0) | 0 / 3 |
| S (1, 1, 1) | S (1, 1, 0) | 0 / 5 |
| S (1, 1, 1) | S (1, 1, 1) | 1 / 6 |

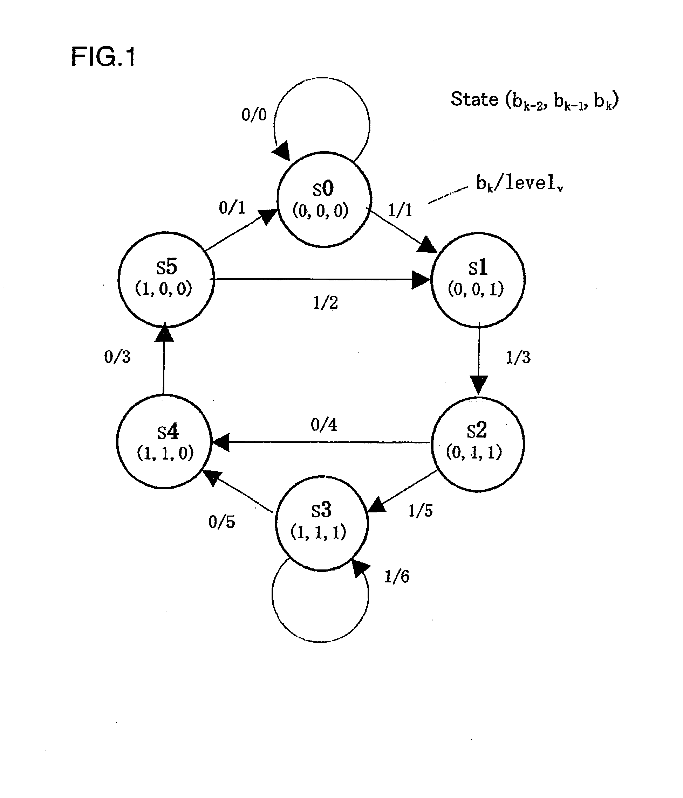

Figure 1 is a state transition diagram A which shows state transition rules defined by a recording code having a minimum polarity reversal interval of 2 and an equalization system PR (1, 2, 2, 1).

$S0_k$ denotes a state S (0, 0, 0)$_k$ at time k. $S1_k$ denotes a state S (0, 0, 1)$_k$ at time k. $S2_k$ denotes a state S (0, 1, 1)$_k$ at time k. $S3_k$ denotes a state S (1, 1, 1)$_k$ at time k. $S4_k$ denotes a state S (1, 1, 0)$_k$ at time k. $S5_k$ denotes a state S (1, 0, 0)$_k$ at time k.

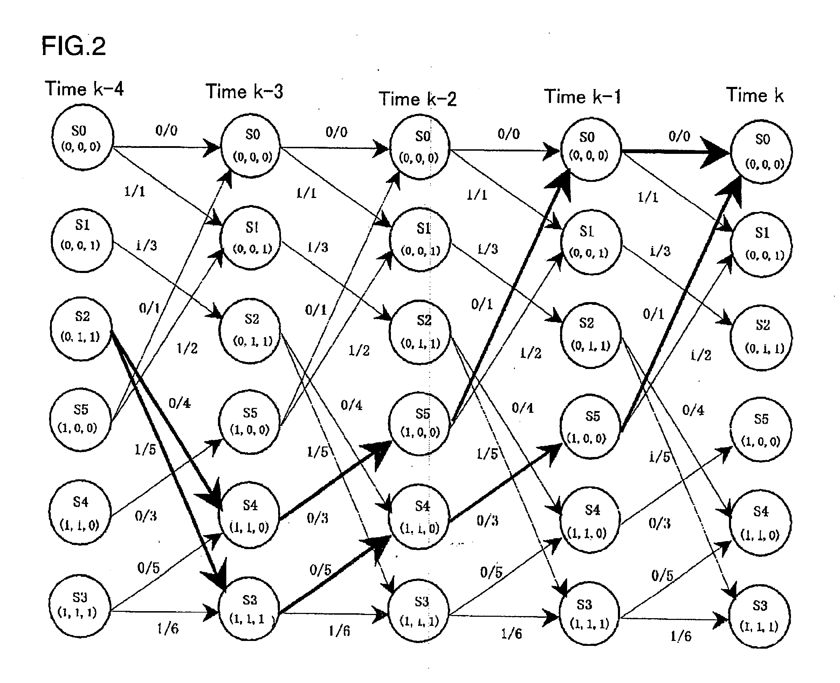

Figure 2 is a trellis diagram which is obtained by extending the state transition diagram A along a time axis.

The state transition defined by a recording code having a minimum polarity reversal interval of 2 and an equalization system PR (1, 2, 2, 1) will be describe with reference to Figures **1** and **2**.

Focus is given to the state $S0_k$ at time k and the state $S2_{k-4}$ at time k-4. Figure **2** is a drawing for showing two state transition sequences (Path A and Path B) which are possible between the state $S0_k$ and the state $S2_{k-4}$. The transition on the Path A is the state $S2_{k-4}$, the state $S4_{k-3}$, the state $S5_{k-2}$, the state $S0_{k-1}$, and the state $S0_k$. The transition on the Path B is the state $S2_{k-4}$, the state $S3_{k-3}$, the state $S4_{k-2}$, the state $S5_{k-1}$, and the state $S0_k$.

It is assumed that ($C_{k-6}$, $C_{k-5}$, $C_{k-4}$, $C_{k-3}$, $C_{k-2}$, $C_{k-1}$, $C_k$) denotes a result of the maximum likelihood decoding from time k-6 to time k. In this case, when a decoding result is obtained to satisfy ($C_{k-6}$, $C_{k-5}$, $C_{k-4}$, $C_{k-3}$, $C_{k-2}$, $C_{k-1}$, $C_k$) = (0, 1, 1, x, 0, 0, 0) (where x is a value being 0 or 1), it is estimated which one of the Path A and the Path B is most probable. Since the probability of the state at time k-4 being $S2_{k-4}$ is the same for both the Path A and the Path B, it is possible to find out which one of the Path A and the Path B is probable by calculating a sum of square values of the differences between each of the values from a reproduction signal $y_{k-3}$ at time k-3 to a reproduction signal $y_k$ at time k and each of the expected values on the Path A and the Path B.

Pa denotes the sum of a square value of the difference between the reproduction signal $y_{k-3}$ at time k-3 and the expected value on the Path A at time k-3; a square value of the difference between the reproduction signal $y_{k-2}$ at time k-2 and the expected value on the Path A at time k-2; a square value of the difference between the reproduction signal $y_{k-1}$ at time k-1 and the expected value on the Path A at time k-1; and a square value of the difference between the reproduction signal $y_k$ at time k and the expected value on Path A at time k. Pa is expressed by the following Expression 1.

Expression 1:
$$Pa = (y_{k-3} - 4)^2 + (y_{k-2} - 3)^2 + (y_{k-1} - 1)^2 + (y_k - 0)^2$$

Pb denotes the sum of a square value of the difference between the reproduction signal $y_{k-3}$ at time k-3 and the expected value on the Path B at time k-3; a square value of the difference between the reproduction signal $y_{k-2}$ at time k-2 and the expected value on the Path B at time k-2; a square value of the difference between the reproduction

signal $y_{k-1}$ at time k-1 and the expected value on the Path B at time k-1; and a square value of the difference between the reproduction signal $y_k$ at time k and the expected value on Path B at time k. Pb is expressed by the following Expression 2.

$$\text{Expression 2:}$$

$$Pb = (y_{k-3} - 5)^2 + (y_{k-2} - 5)^2 + (y_{k-1} - 3)^2 + (y_k - 1)^2$$

Accordingly, Pa-Pb shows the reliability of the result of the maximum likelihood decoding.

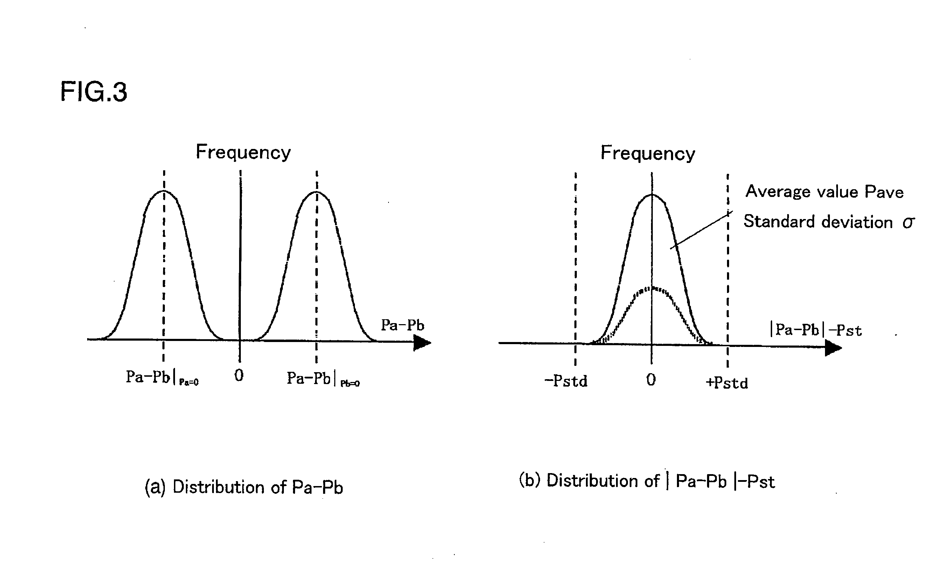

Figure 3 shows a distribution of Pa-Pb. The meaning of the difference represented by Pa-Pb will be described. When Pa « Pb is satisfied, the maximum likelihood decoding unit selects the Path A with a high probability. When Pa » Pb is satisfied, the maximum likelihood decoding unit selects the Path B with a high probability. When Pa = Pb is satisfied, the maximum likelihood decoding unit selects the Path A or the Path B with a probability of 50%, and the probability of the decoding result by the maximum likelihood decoding unit being correct is 50%. In this way, it is possible to obtain the distribution of Pa-Pb by calculating Pa-Pb based on the decoding results for a predetermined period or for a predetermined number of times.

Figure 3(a) shows a distribution of Pa-Pb which is calculated based on a reproduction signal on which noise is superposed. The distribution has two peaks. One of the peaks indicates that the frequency has a local maximum when Pa = 0, while the other indicates that the frequency has a local maximum when Pb = 0.

The absolute value of Pa-Pb is calculated, and |Pa-Pb| - Pstd is calculated. Herein, -Pstd denotes a value of Pa-Pb (where Pa = 0), while Pstd denotes a value of Pa-Pb (where Pb = 0).

Figure 3(b) shows a distribution of |Pa-Pb| - Pstd. A standard deviation σ and an average value Pave of the distribution shown in Figure 3(b) are calculated. It is assumed that the distribution shown in Figure 3(b) is a normal distribution and that a state where an error occurs is defined as a state where a value of |Pa-Pb| indicating the reliability of the decoding result is equal to or smaller than -Pstd based on σ and Pave. In this case, an error probability P(σ, Pave) is expressed by the following Expression 3.

$$\text{Expression 3:}$$

$$P(\sigma, \text{Pave}) = \text{erfc}((\text{Pstd} + \text{Pave}) / \sigma)$$

It is possible to estimate the error probability of a two-valued signal indicating the maximum likelihood decoding result using the average value Pave and the standard deviation σ which are calculated from the distribution of Pa-Pb. That is, the average value Pave and the standard deviation σ can be used as an index for the quality of the reproduction signal.

In the example above, it is assumed that the distribution of |Pa-Pb| is a normal distribution. However, even when the distribution is not a normal distribution, it is possible to count the number of times when the value of |Pa-Pb| - Pstd is equal to or smaller than a predetermined reference value. In this case, the number of counts can be used as an index for the quality of the signal.

When a state transition rule defined by a recording code having a minimum polarity reversal interval of 2 and an equalization systemPR (1, 2, 2, 1) isused, for combinations taking two possible state transition sequences when the state makes a transition, there are eight patterns in the range from time k-4 to time k, while there are sixteen patterns in the range from time k-5 to time k.

An important point to be noted here is that the use of the value of Pa-Pb indicating the reliability as an index for the quality of reproduction signal makes it possible to use the detection result as an index correlated to the error probability, by detecting only the patterns in which the probability of making an error (i.e. the error probability) is large, without having to detect all the patterns. Herein, the patterns in which the probability of making an error is large are referred to as patterns in each of which the value of Pa-Pb indicating the reliability is small. There are eight such patterns where Pa-Pb = ± 10. Table 2 below shows a summary of these eight patterns and the values of Pa-Pb.

Table 2: Combinations of shortest state transitions having two possible state transitions.

| State Transition | Pa-Pb indicating the reliability of decoding result | |
|---|---|---|
| | When Pa = 0 | When Pb = 0 |
| $S2_{k-4} \rightarrow S0_k$ | -10 | +10 |

Table continued

| State Transition | Pa-Pb indicating the reliability of decoding result | |
| --- | --- | --- |
| | When Pa = 0 | When Pb = 0 |
| $S3_{k-4} \rightarrow S0_k$ | -10 | +10 |
| $S2_{k-4} \rightarrow S1_k$ | -10 | +10 |
| $S3_{k-4} \rightarrow S1_k$ | -10 | +10 |
| $S0_{k-4} \rightarrow S4_k$ | -10 | +10 |
| $S5_{k-4} \rightarrow S4_k$ | -10 | +10 |
| $S0_{k-4} \rightarrow S3_k$ | -10 | +10 |
| $S5_{k-4} \rightarrow S3_k$ | -10 | +10 |

By summarizing the values of Pa-Pb indicating the reliability of the decoding results in these eight patterns , Expression 4 below is obtained.

**Expression 4:**

**Pattern 1**

When $(C_{k-6}, C_{k-5}, C_{k-4}, C_{k-3}, C_{k-2}, C_{k-1}, C_k) = (0, 1, 1, x, 0, 0, 0)$,

$Pa-Pb = (E_{k-3} - F_{k-3}) + (D_{k-2} - F_{k-2}) + (B_{k-1} - D_{k-1}) + (A_k - B_k)$

**Pattern 2**

When $(C_{k-6}, C_{k-5}, C_{k-4}, C_{k-3}, C_{k-2}, C_{k-1}, C_k) = (1, 1, 1, x, 0, 0, 0)$,

$Pa-Pb = (F_{k-3} - G_{k-3}) + (D_{k-2} - F_{k-2}) + (B_{k-1} - D_{k-1}) + (A_k - B_k)$

Pattern 3

When $(C_{k-6}, C_{k-5}, C_{k-4}, C_{k-3}, C_{k-2}, C_{k-1}, C_k) = (0, 1, 1, x, 0, 0, 1)$,

$Pa-Pb = (E_{k-3} - F_{k-3}) + (D_{k-2} - F_{k-2}) + (B_{k-1} - D_{k-1}) + (B_k - C_k)$

Pattern 4

When $(C_{k-6}, C_{k-5}, C_{k-4}, C_{k-3}, C_{k-2}, C_{k-1}, C_k) = (1, 1, 1, x, 0, 0, 1)$,

$Pa-Pb = (F_{k-3} - G_{k-3}) + (D_{k-2} - F_{k-2}) + (B_{k-1} - D_{k-1}) + (B_k - C_k)$

Pattern 5

When $(C_{k-6}, C_{k-5}, C_{k-4}, C_{k-3}, C_{k-2}, C_{k-1}, C_k) = (0, 0, 0, x, 1, 1, 0)$,

$Pa-Pb = (A_{k-3} - B_{k-3}) + (B_{k-2} - D_{k-2}) + (D_{k-1} - F_{k-1}) + (E_k - F_k)$

Pattern 6

When $(C_{k-6}, C_{k-5}, C_{k-4}, C_{k-3}, C_{k-2}, C_{k-1}, C_k) = (1, 0, 0, x, 1, 1, 0)$,

$Pa-Pb = (B_{k-3} - C_{k-3}) + (B_{k-2} - D_{k-2}) + (D_{k-1} - F_{k-1}) + (E_k - F_k)$

Pattern 7

When $(C_{k-6}, C_{k-5}, C_{k-4}, C_{k-3}, C_{k-2}, C_{k-1}, C_k) = (0, 0, 0, x, 1, 1, 1)$,

$Pa-Pb = (A_{k-3} - B_{k-3}) + (B_{k-2} - D_{k-2}) + (D_{k-1} - F_{k-1}) + (F_k - G_k)$

Pattern 8

When $(C_{k-6}, C_{k-5}, C_{k-4}, C_{k-3}, C_{k-2}, C_{k-1}, C_k) = (1, 0, 0, x, 1, 1, 1)$

$$Pa-Pb = (B_{k-3} - C_{k-3}) + (B_{k-2} - D_{k-2}) + (D_{k-1} - F_{k-1}) + (F_k - G_k)$$

$$\text{where } A_k = (y_k - 0)^2, \; B_k = (y_k - 1)^2, \; C_k = (y_k - 2)^2,$$
$$D_k = (y_k - 3)^2, \; E_k = (y_k - 4)^2, \; F_k = (y_k - 5)^2, \text{ and } G_k = (y_k - 6)^2$$

From a maximum likelihood decoding result $C_k$, a value of Pa-Pb which satisfies Expression 4 is obtained, and a standard deviation $\sigma_{10}$ and an average value $Pave_{10}$ are calculated from the distribution of Pa-Pb. Under the assumption that the distribution is a normal distribution, the probability of making an error $P_{10}$ is expressed by the following Expression 5.

Expression 5:
$$P_{10} (\sigma_{10}, \; Pave_{10}) = erfc \; ((10 + Pave_{10})/\sigma_{10})$$

The eight patterns described above are patterns in each of which a one-bit shift error occurs . The other patterns are patterns in each of which a shift error of two bits or more occurs . According to the result of analyzing error patterns after a PRML processing, it is found that most of error patterns represent a one-bit shift error. Accordingly, it is possible to estimate the error probability of the reproduction signal by using Expression 6 below. Thus, it is possible to use the standard deviation $\sigma_{10}$ and the average value $Pave_{10}$ as an index for the quality of the reproduction signal. For example, when the index is referred to as index M, the index M can be defined by the following Expression 6.

Expression 6:
$$M = \sigma_{10} \; / \; (2*d_{min}^{\;2})[\%]$$

where $d_{min}^2$ is the square of a minimum value of a Euclidean distance. For example, when a modulation code having a minimum polarity reversal interval of 2 is combined with a PR (1, 2, 2, 1) ML system, $d_{min}^2 = 10 = Pstd$. Further, the average value $Pave_{10}$ in Expression 5 is assumed to be 0 and is disregarded in the calculation of the index using Expression 6.
Thus, the description on the index (i.e. the index M) for evaluating reproduction signals based on the maximum likelihood decoding method has been completed.

2. An optical disc apparatus according to an embodiment of the present invention

Hereinafter, a configuration and an operation of the optical disc apparatus **100** according to an embodiment of the present invention will be described.

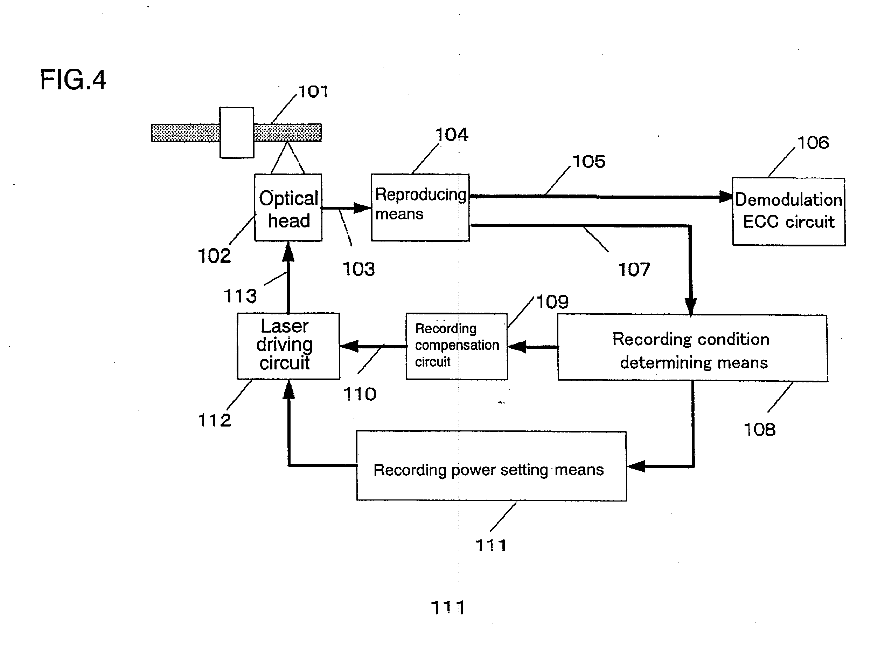

Figure **4** shows a configuration of the optical disc apparatus **100** according to an embodiment of the present invention. The optical disc apparatus 100 is configured so that an optical disc **101** can be mounted thereon.

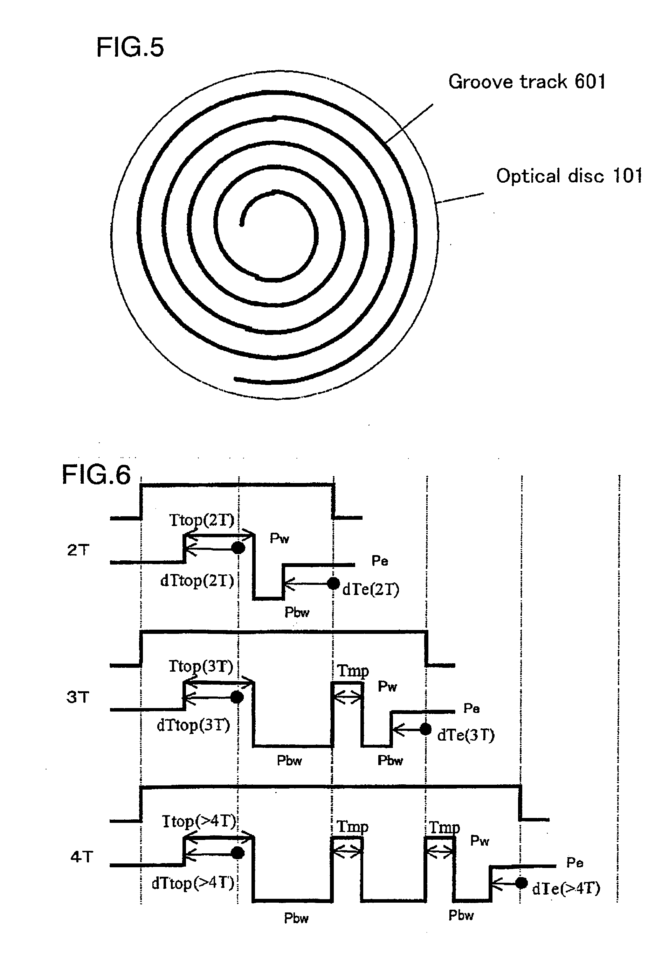

Figure 5 shows a configuration of the optical disc **101. A** groove track **601** is formed on the optical disc **101.** The groove track **601** has a shape of spirals or concentric circles, for example. The groove track **601** includes a recording area.
The configuration of the optical disc apparatus 100 will be described with reference to Figure **4.** The optical disc apparatus **100** includes an optical head **102,** a reproducing means **104,** a demodulation ECC circuit **106,** a recording condition determining means **108,** a recording compensation circuit **109,** a recording power setting means **111,** and a laser driving circuit **112.**

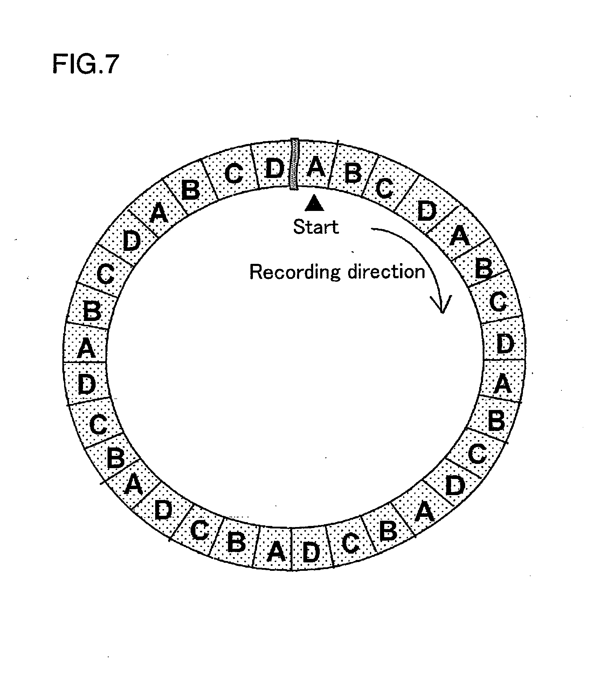

Figure 6 shows a waveform of a light beam irradiated by an optical head 102 when a recording is performed.

In the present embodiment, it is assumed that data according to a Run Length Limited (1, 7) modulation system is recorded using a mark edge recording method. In this case, seven kinds of marks and spaces exist, with 2T being the shortest and 8T being the longest (where T denotes a reference cycle).. It should be noted that the recording method is not limited to the mark edge recording method, and any other recording method may be used.

Parameters for light waveforms include parameters indicating recording powers and parameters indicating pulse positions. The parameters indicating recording powers include PW (peak power), Pe (bias power), and Pbw (bottom power). The parameters indicating pulse positions include Ttop, dTtop, Tmp, and dTe. Herein, the rising position of a pulse having a width of Tmp and the starting point of a dTtop of a first pulse are reference positions which define the relative relations with an original signal.

The number of pulses is adjusted according to the lengths of marks formed on the optical disc **101**. A 2T mark is recorded with one pulse and a 3T mark is recorded with two pulses. The number of pulses is increased by one, as the length of the mark formed on the optical disc **101** becomes longer by 1T.

In general, some of the parameters for light waveforms (e. g. Pw (peak power), Pe (bias power), Pbw (bottom power), and Tmp) do not depend on the lengths of marks, while some other parameters for light waveforms (e.g. Ttop, dTtop, and dTe) depend on the lengths of marks. However, it may be arbitrarily determined how to set parameters for light waveforms.

The operation of the optical disc apparatus **100** will be described with reference to Figure **4.** As will be described below, the optical disc apparatus **100** records information on the optical disc **101** under one recording condition of a plurality of recording conditions. For example, each of the plurality of recording conditions indicates a parameter for a light waveform.

When the optical disc **101** is mounted on the optical disc apparatus **100,** and a predetermined operation of the optical disc apparatus **100** (such as identifying a disc type, controlling the rotation and so on) is completed, the optical head **102** is controlled so that it moves to a test area included in the optical disc **101**. Test information for setting an optimum recording power and an optimum pulse position are recorded in the test area for test purposes. For example, the test area may be provided in the innermost track of the optical disc **101**. However, the location of the of the test area is not limited to the innermost track of the optical disc **101,** as long as the test area is within a recording area provided outside a user area for recording user data. For example, the test area may be provided in the outermost track of the optical disc **101.**

When the test recording is performed, the recording power setting means **111** sets initial values of the recording powers (i.e. the initial values of the peak power, the bias power, and the bottom power) to the laser driving circuit **112**. The initial values of the recording powers are recorded on the optical disc **101** in advance when the optical disc 101 is manufactured. However, it is possible to calculate initial values of the recording powers based on the test recording when the optical disc 101 is mounted on the optical disc apparatus **100** and to record the calculated initial values on the optical disc **101.**

In a case where the initial values of the recording powers calculated based on the test recording are set to the laser driving circuit **112,** the initial values are calculated with consideration of variation in quality of optical discs and variation in quality of optical disc apparatuses, unlike in the case where the initial values of the recording powers recorded in advance on the optical disc **101** at time of the manufacturing of the optical disc **101** are set to the laser driving circuit **112.** Thus, when the initial values based on the test recording are used, it is possible to perform a good recording in which an S/N (signal/noise) ratio is well maintained.

The recording compensation circuit **109** sends a signal **110** to the laser driving circuit **112.**

The laser driving circuit **112** generates a pulse sequence signal **113** which is shaped according to the length of the mark to be recorded. The laser driving circuit **112** sends the pulse sequence signal **113** to the optical head **102.** The optical head **102** test-records a test signal on the optical disc **101** based on the pulse sequence signal **113.** An output light beam from a semiconductor laser provided on the optical head **102** is focused into a light spot on the optical disc **101,** and the semiconductor laser forms a recording mark according to the light waveform on the optical disc 101. The details of the test signal will be described later.

It is possible to record data in the test area with only a bias power, before the test recording is performed. By recording data with only a bias power, it is possible to erase the signals from the test area, which have been recorded in the test area before the test recording is performed. As a result, it is possible to reduce the influence that the signals having been recorded in the test area before the test recording is performed may give to the test recording.

The wavelength of the laser beam from the optical head 102 is approximately 405 nm, and the NA (Numerical Aperture) of the objective lens is approximately 0.85. The shortest mark length is approximately 0.16 micron.

Figure **7** shows test signals recorded on an optical disc for optimizing a pulse position of a 3T mark. The test signals have various conditions and are test-recorded on a groove track.

The groove track is included in the test area. The test signals are recorded on the groove track under a plurality of conditions. Specifically, a test signal A having a condition A, a test signal B having a condition B, a test signal C having a condition C, and a test signal D having a condition D are recorded on the groove track a plurality of times in this order.

Based on reproduction signals obtained by reproducing these recorded signals, it is possible to reduce the influence from variations in tilting in the direction of the circumference of the optical disc **101** and from damages and dirt on the disc.

The initial value indicating a pulse position indicates the condition A, for example. A value indicating the condition A can be recorded on the optical disc 101 in advance. A value indicating the condition A can be calculated in advance based on the result of a test recording.

An example in which the initial value for the pulse position is recorded on the optical disc **101** in advance is a case where a value used in common among a plurality of optical discs manufactured under the same condition is described when the optical discs are manufactured. For example, it is possible to record such a common value in advance by wobbling the groove. An example in which the initial value for the pulse position is calculated in advance based on the result of a test recording is a case where a recording parameter, which has been previously optimized for targeting the optical disc **101,** is recorded in the test area. In a case where both a value recorded when the optical disc **101** is manufactured and a value of a recording parameter previously optimized targeting the optical disc **101** are recorded on the optical disc **101,** it is desirable to use the value of the recording parameter which has been previously optimized for targeting the optical disc **101.** Because the value of the recording parameter which has been previously optimized for targeting the optical disc **101** is calculated with consideration of variation in quality of optical discs and variation in quality of optical disc apparatuses, it is possible to perform a good recording in which an S/N ratio is well maintained based on such a value.

It should be noted that instead of recording four conditions in one round of the track, it is acceptable to record one condition in one round of the track or to use more than one round of track for one test-recording. When the number of samples is larger, the level of precision in the optimization process is improved.

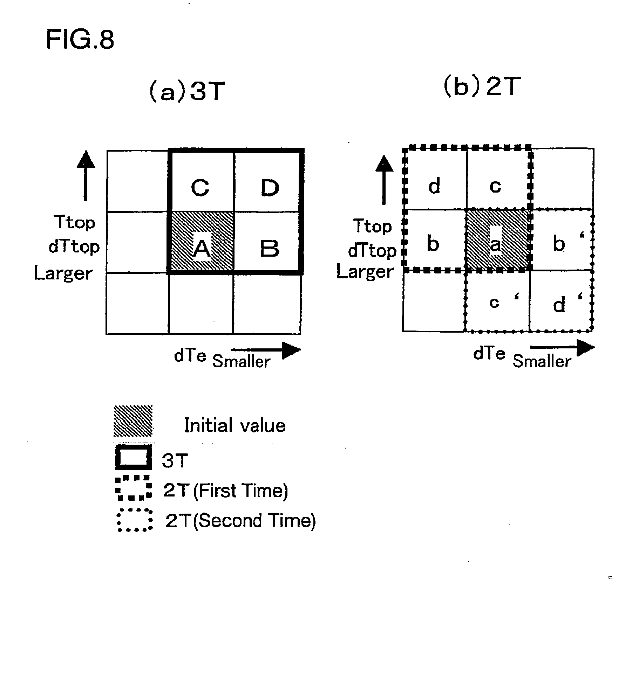

Figure **8** is a drawing for explaining the procedure for determining a plurality of conditions to be used for optimization of a pulse position. It should be noted that the procedure for determining a plurality of conditions to be used for optimization of a pulse position is executed by at least one of the recording condition determining means **108** and the recording compensation circuit **109.**

The procedure for determining the conditions to be used for optimization of a pulse position will be described with reference to Figure **8.**

The procedure for determining the conditions to be used for optimization of a pulse position of a 3T mark will be described with reference to Figure **8(a).**

A condition A is determined as an initial value indicating the pulse position. The value indicating the condition A may be recorded on the optical disc **101** in advance or may be calculated in advance based on a result of a test recording. The optical disc apparatus **100** reads the initial value recorded on the optical disc **101** by controlling the optical head **102.**

Based on the initial condition A, a condition B, a condition C, and a condition D are determined. For example, the condition B is determined by fixing Ttop and dTtop of the condition A and making dTe of the condition A smaller by a predetermined amount ($\Delta$dTe). The condition C is determined by making Ttop of the condition A larger by a predetermined amount ($\Delta$Ttop) and making dTtop of the condition A larger by a predetermined amount ($\Delta$dTtop), and further fixing dTe of the condition A. The condition D is determined by making Ttop of the condition A larger by a predetermined amount ($\Delta$Ttop) and making dTtop of the condition A larger by a predetermined amount ($\Delta$dTtop), and further making dTe of the condition A smaller by a predetermined amount ($\Delta$dTe).

It should be noted that the changing steps of the pulse position (for example, $\Delta$Ttop, $\Delta$dTtop, and $\Delta$dTe) are within the range of approximately 1% to 7% of the window width.

The procedure for determining the conditions to be used for optimization of a pulse position of a 2T mark will be described with reference to Figure **8(b)**.

A condition a is determined as an initial value indicating the pulse position. The value indicating the condition a may be recorded on the optical disc **101** in advance or may be calculated in advance based on a result of a test recording.

The condition b is determined by fixing Ttop and dTtop of the condition a and making dTe of the condition a larger by a predetermined amount ($\Delta$dTe). The condition c is determined by making Ttop of the condition a larger by a predetermined amount ($\Delta$Ttop) and making dTtop of the condition a larger by a predetermined amount ($\Delta$dTtop), and further fixing dTe of the condition a. The condition d is determined by making Ttop of the condition a larger by a predetermined amount ($\Delta$Ttop) and making dTtop of the condition a larger by a predetermined amount ($\Delta$dTtop), and further making dTe of the condition a larger by a predetermined amount ($\Delta$dTe).

Furthermore, a condition b' is determined by fixing Ttop and dTtop of the condition a and making dTe of the condition a smaller by a predetermined amount ($\Delta$dTe). A condition c' is determined by making Ttop of the condition a smaller by a predetermined amount ($\Delta$Ttop) and making dTtop of the condition a smaller by a predetermined amount ($\Delta$dTtop), and further fixing dTe of the condition a. A condition d' is determined by making Ttop of the condition a smaller by a predetermined amount ($\Delta$Ttop) and making dTtop of the condition a smaller by a predetermined amount ($\Delta$dTtop), and further making dTe of the condition a smaller by a predetermined amount ($\Delta$dTe).

It should be noted that the changing steps of the pulse position (for example, $\Delta$Ttop, $\Delta$dTtop, and $\Delta$dTe) are

within the range of approximately 1% to 7% of the window width.

A condition by which the index M is the smallest is temporarily determined by setting a parameter indicating the pulse position of a 2T mark as the condition a, the condition b, the condition c and the condition d (see Figure **8(b)),** and recording and reproducing test signals indicating these conditions. Subsequently, another condition by which the index M is the smallest is temporarily determined by setting a parameter indicating the pulse position of a 2T mark as the condition a, the condition b', the condition c' and the condition d' (see Figure **8(b)**), and recording and reproducing test signals indicating these conditions. Among the two conditions that have been temporarily determined, a condition by which the index M is smaller is determined as a condition indicating the pulse position of the 2T mark.

When the pulse position of a 3T mark is to be changed, the pulse positions of marks other than the 3T mark will not be changed. Likewise, when the pulse position of a 2T mark is to be changed, the pulse positions of marks other than the 2T mark will not be changed. The data to be recorded may be in a random pattern, or may be fixed in a specific pattern. It is desirable that the changing steps of the pulse positions are within the range of approximately 1% to 7% of the window width.

One method to be used to make the index M smaller is to identify the 2T mark and the 3T mark accurately. By optimizing the pulse positions of one or both of the 2T mark and the 3T mark, as in the present embodiment, it is possible to perform the recording more accurately.

It should be noted that, in the present embodiment, the optimum pulse position of the 3T mark is determined in a single process by test-recording and reproducing under the four conditions, while the optimum pulse position of the 2T mark is determined in two processes by test-recording and reproducing using the seven conditions. However, the procedure for determining the pulse positions is not limited to this example. Further, in the present embodiment, Ttop and dTtop are determined at the same time; however, the procedure for determining Ttop and dTtop is not limited to this example.

Furthermore, in the preset embodiment, the 3T mark is recorded with the pulse position that corresponds to the four conditions, and the three conditions other than the initial condition are conditions by which the 3T mark is recorded long. Because 2T marks that have a higher frequency level of appearance are identified more accurately, the possibility of finding an optimum condition is higher when a condition is used by which the 3T mark is long.

In addition, in the present embodiment, the 2T mark is recorded with the pulse position that corresponds to the seven conditions. Because the S/N ratio of a 2T signal largely varies depending on variations in optical discs and variations in optical disc apparatuses, searches using only a specific direction are not performed. It should be noted that in Figure **8(b),** a search is not made for a condition at the top right and a condition at the bottom left in the present embodiment because there is a risky possibility that the mark lengths may largely vary from the initial status.

Further, the conditions for determining pulses to be used when the 2T mark and the 3T mark are recorded according to the present embodiment are valid in a case where the initial condition is determined with the same procedure as in the present embodiment or in a case where the initial condition is determined with the same procedure as in the conventional example where the jitter gets smaller. When there is no evidence that the initial condition and the optimum condition are close to each other, it is acceptable to use a different condition for determining pulses from the one in the present embodiment.

The description on the operation of the optical disc apparatus **100** will be continued with reference back to Figure **4.**

When the test-recording of the test signal A, the test signal B, the test signal C, and the test signal D indicating the pulse positions of the 3T mark is finished, the laser diving circuit **112** controls the optical head **102** so that the optical head **102** reproduces the test signal A, the test signal B, the test signal C, and the test signal D that are recorded on the optical disc **101.** A reproduction signal **103** which is generated by reproducing the test signal A, the test signal B, the test signal C, and the test signal D is input to the reproducing means **104.** The reproduction signal **103** changes depending on whether or not a recording mark is formed on the optical disc **101.**

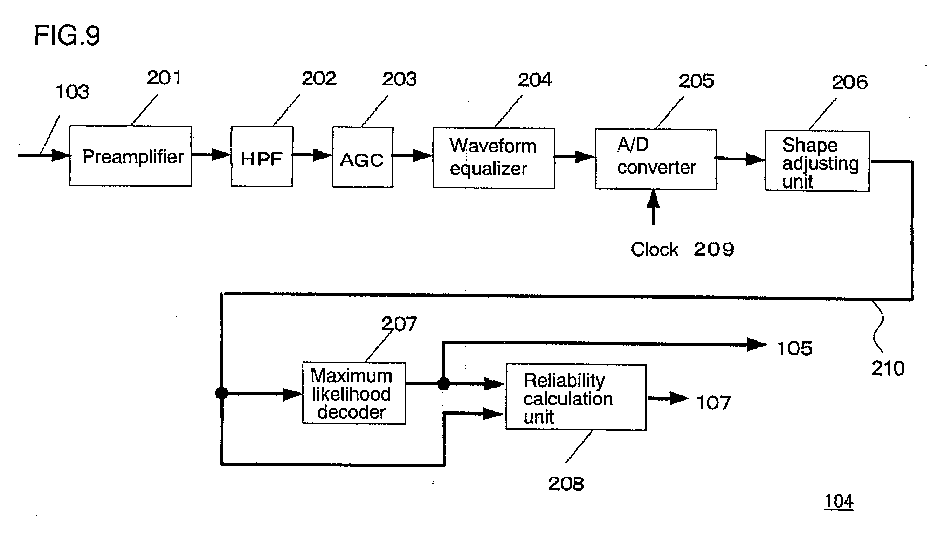

Figure 9 shows a configuration of the reproducing means **104.** The reproducingmeans **104** includes a preamplifier **201,** a high pass filter **202,** an AGC circuit **203,** a waveform equalizer **204,** an A/D converter **205,** a shape adjusting unit **206,** a maximum likelihood decoder **207,** and a reliability calculation unit **208.**

The shape adjusting unit **206** may be a digital fliter, for example, which receives a digital signal generated by the A/D converter **205** and adjusts the shape of the waveform of the digital signal so that the digital signal has a predetermined equalization characteristic.

The maximum likelihood decoder **207** may be a Viterbi decoding circuit, for example, that performs a maximum likelihood decoding on the digital signal of which the waveform has been adjusted and which has been output by the shaping adjusting unit **206** and that generates a two-valued signal which indicates the result of the maximum likelihood decoding.

The reliability calculation unit **208** may be a differential metric analyzing device, for example, which calculates the reliability of the result of the maximum likelihood decoding based on the digital signal of which the waveform has been adjusted and which has been output by the shape adjusting unit **206** and the two-valued signal which has been output by the maximum likelihood decoder **207.** The reliability of the result of the maximum likelihood decoding is indicated by a divergence between the digital signal of which the waveform has been adjusted and which has been output by the shape adjusting unit **206** and the two-valued signal which has been output by the maximum likelihood decoder **207** or by a divergence between the digital signal of which the waveform has been adjusted and which has been output by the shape adjusting unit **206** and a signal generated based on the two-valued signal which has been output by the maximum likelihood decoder **207.**

The preamplifier **201** amplifies the signal **103.** The amplified signal **103** is input to the AGC **203** after an AC coupling is performed by the high pass filter **202.** The AGC **203** adjusts the gain so that the output from the waveform equalizer **204** has a specific amplitude. The waveform of the reproduction signal output from the AGC **203** is adjusted by the waveform equalizer **204.** The reproduction signal of which the waveform has been adjusted is input to the A/D converter **205.** The A/D converter **205** performs a sampling on the reproduction signal using a clock **209.** The clock **209** is generated by a PLL (not shown in the drawings) based on the reproduction signal.

The reproduction signal generated through the sampling performed by the A/D converter **205** is input to the shape adjusting unit **206.** The shape adjusting unit **206** adjusts the frequency of the reproduction signal (i.e. adjusts the shape of the waveform of the reproduction signal) so that the frequency characteristic of the reproduction signal at the time of the recording and at the time of the reproduction coincides with the characteristic estimated by the maximum likelihood decoder **207** (e.g. the PR(1, 2, 2,1) equalization characteristic in the present embodiment).

The maximum likelihood decoder **207** performs a maximum likelihood decoding on the reproduction signal of which the waveform has been adjusted and which has been output by the shape adjusting unit **206** so as to generate a two-valued signal. The reliability calculation unit **208** receives the reproduction signal of which the waveform has been adjusted and which has been output by the shape adjusting unit **206** and the two-valued signal. The reliability calculation unit **208** determines a state transition from the two-valued signal. The reliability calculation unit **208** calculates index M (see Expression 6) indicating the reliability of the result of the decoding based on the determination result and data **210.** The reliability calculation unit **208** calculates a plurality of indexes M' s based on reproduction signals that correspond to a plurality of test signals A's and further calculates the average of the plurality of indexes M's that have been calculated. The reliability calculation unit **208** further calculates the average of a plurality of indexes M's with respect to a plurality of test signals B's, a plurality of test signals C's, and a plurality of test signals D's, in the same way as with the plurality of test signals A's.

An output result **107** is sent to the recording condition determining means **108.** The output result **107** includes the average values calculated above.

The recording condition determining means **108** selects (or determines) a condition that corresponds to the smallest of the plurality of average values included in the output result **107** as the condition for the pulse position of the 3T mark. It should be noted that when there are average values that are equal or similar to one another, the value may be determined according to a priority order that has been assigned in advance. For example, it is acceptable to have an arrangement wherein the average of the plurality of indexes based on the plurality of test signals C's is prioritized over the average of the plurality of indexes based on the plurality of test signals D's. It is acceptable to have an arrangement wherein the average of the plurality of indexes based on the plurality of test signals B's is prioritized over the average of the plurality of indexes based on the plurality of test signals C's. It is acceptable to have an arrangement wherein the average of the plurality of indexes based on the plurality of test signals A's is prioritized over the average of the plurality of indexes based on the plurality of test signals B's.

The present invention is not limited to the arrangement of having the plurality of test signals A's, the plurality of test signals B's, the plurality of test signals C's, and the plurality of test signals D's. When any of the test signals A, B, C, and D exists in a single form, there is no need to calculate the average of the indexes based on a plurality of test signals.

In the discussion above, an embodiment is explained wherein a maximum likelihood decoding is performed on a plurality of test signals, then a plurality of two-valued signals indicating the results of the maximum likelihood decoding processes are generated so that the reliability calculation unit 208 calculates indexes M's indicating the reliability of the results of the decoding processes based on the plurality of test signals and the plurality of two-valued signals; however, the calculation of indexes indicating the reliability is not limited to this example. For example, in a case where a signal indicating a plurality of paths generated by the maximum likelihood decoder 207 based on a test signal is input to the reliability calculation unit **208,** the reliability calculation unit **208** calculates a plurality of indexes indicating the reliability of the test signal based on the test signal and the plurality of paths. For example, the reliability calculation unit **208** calculates a divergence between the test signal and a path A and a divergence between the test signal and a path B. The reliability calculation unit **208** calculates an index indicating the reliability of the test signal by referring to these differences. The recording condition determining means **408** is able to select one recording condition of the plurality of recording conditions based on a plurality of indexes indicating the reliability of each of a plurality of test signals.

As explained so far, a parameter indicating the pulse position of the 3T mark has been optimally determined. The relative position of a plurality of light pulses included in the light beam is determined according to this parameter.

By irradiating the optical disc **101** with the light beam, it is possible to form an optimum 3T mark on the optical disc **101.**

Optimization of a parameter indicating a pulse position of a 2T mark is performed in the same way as the optimization of the parameter indicating the pulse position of a 3T mark.

The procedure for optimally determining a parameter indicating a pulse position of a 2T mark will be described.

When test recordings of the test signal a, the test signal b, the test signal c, the test signal d, the test signal b' , the test signal c' , and the test signal d' which indicate the pulse position of a 2T mark have been finished, the laser driving circuit **112** controls the optical head **102** so that the optical head 102 reproduces these test signals that have been recorded on the optical disc **101**. A reproduction signal **103** which is generated by reproducing these test signals is input to the reproducing means **104**. The reproduction signal **103** changes depending on whether or not a recording mark is formed on the optical disc **101.**

The reliability calculation unit **208** calculates a plurality of indexes M's based on reproduction signals that correspond to a plurality of test signals a's and further calculates the average of the plurality of indexes M's that have been calculated. The reliability calculation unit **208** further calculates the average of a plurality of indexes M's with respect to a plurality of test signals b's, a plurality of test signals c's, and a plurality of test signals d's, in the same way as with the plurality of test signals a's.

An output result **107** is sent to the recording condition determining means **108**. The output result **107** includes the average values calculated above.

The recording condition determining means **108** makes a first temporary determination of a condition that corresponds to the smallest of the plurality of average values included in the output result **107** as the condition for the pulse position of the 2T mark.

Further, the reliability calculation unit **208** calculates the average of a plurality of indexes M's with respect to a plurality of test signals a's, a plurality of test signals (b')'s, a plurality of test signals (c')'s, and a plurality of test signals (d')'s.

The output result **107** is sent to the recording condition determining means **108.** The output result **107** includes the average values calculated above.

The recording condition determining means **108** makes a second temporary determination of a condition that corresponds to the smallest of the plurality of average values included in the output result **107** as the condition for the pulse position of the 2T mark.

The recording condition determining means 108 determines a condition that corresponds to the smallest value of the conditions that have been obtained in the first and second temporary determinations as the condition for the pulse position of the 2T mark.

In a case where the index M based on the test signal a calculated for the first temporary determination and the index M based on the test signal a calculated for the second temporary determination are different from each other, each of these indexes is normalized so that a condition that corresponds to the smallest value is determined as a condition for the pulse position of a T mark. For example, the indexes based on the plurality of test signals b's, the indexes based on the plurality of test signals c's, and the indexes based on the plurality of test signals d's are normalized based on the index M based on the test signal a calculated for the first temporary determination. Further, the indexes based on the plurality of test signals (b')'s, the indexes based on the plurality of test signals (c')'s, and the indexes based on the plurality of test signals (d')'s are normalized based on the index M based on the test signal a calculated for the second temporary determination. It should be noted that when a recording is performed in order to determine a condition for the pulse position of a 2T mark, the condition for determining the pulse position for an immediately preceding 3T mark is reflected.

It should be noted that when there are average values that are equal or similar to one another, the value may be determined according to a priority order that has been assigned in advance. For example, it is acceptable to have an arrangement wherein the average of the plurality of indexes based on the plurality of test signals c's is prioritized over the average of the plurality of indexes based on the plurality of test signals d's. It is acceptable to have an arrangement wherein the average of the plurality of indexes based on the plurality of test signals b's is prioritized over the average of the plurality of indexes based on the plurality of test signals c's. It is acceptable to have an arrangement wherein the average of the plurality of indexes based on the plurality of test signals a's is prioritized over the average of the plurality of indexes based on the plurality of test signals b's. It is acceptable to have an arrangement wherein the average of the plurality of indexes based on the plurality of test signals (c')'s is prioritized over the average of the plurality of indexes based on the plurality of test signals (d')'s. It is acceptable to have an arrangement wherein the average of the plurality of indexes based on the plurality of test signals (b')'s is prioritized over the average of the plurality of indexes based on the plurality of test signals (c')'s. It is acceptable to have an arrangement wherein the average of the plurality of indexes based on the plurality of test signals (a')'s is prioritized over the average of the plurality of indexes based on the plurality of test signals (b')'s. Further, the priority order may be given in the order of: the plurality of test signals a's, the plurality of test signals (b')'s, the plurality of test signals b's, the plurality of test signals (d')'s, the plurality of test signals (c')'s, the plurality of test signals d's, and the plurality of test signals c's. Alternatively, the priority order may be given in the order of: the plurality of test signals a's, the plurality of test signals b's, the plurality of test signals (b')'s, the plurality of test signals d's, the plurality of test signals c's, the plurality of test signals (d')'s, and the plurality of test signals (c')'s.

Furthermore, the present invention is not limited to the arrangement of having the plurality of test signals a's, the plurality of test signals b's, the plurality of test signals c's, the plurality of test signals d's, the plurality of test signals (b')'s, the plurality of test signals (c')'s, and the plurality of test signals (d')'s. When any of these test signals exist in a single form, there is no need to calculate the average of the indexes based on a plurality of test signals.

As explained so far, a parameter indicating the pulse position of the 2T mark has been optimally determined. The relative position of a plurality of light pulses included in the light beam is determined according to this parameter. By irradiating the optical disc **101** with the light beam, it is possible to form an optimum 2T mark on the optical disc **101.**

In general, out of the parameters for the light waveforms according to the present embodiment, the recording mark shape varies according to a change in one step with dTe by a smaller amount than with Ttop or with dTtop. By giving the highest priority to the initial condition and giving the second highest priority to a condition with which the recording mark shape varies by a small amount, it is possible to determine a condition which satisfies both the initial condition and the pulse position change condition according to the present embodiment. Consequently, it is possible to improve reproduction stability in a reproduction apparatus that does not have a circuit configuration according to the present embodiment.

For example, in a case where the initial condition is determined so as to be equal to or smaller than a predetermined jitter, by setting a priority order like in the present embodiment, it is possible to determine a pulse position that makes both the jitter and the index M good. As explained above, the clock 209 is output from the PLL, and since the jitter is an index for stable operation of the PLL, by finding a condition that makes both the jitter and the index M good, it is possible to perform more accurate recording and reproduction. Further, in a case where the initial condition is determined as a condition by which the output signal from an edge interval measuring circuit 508 is small due to the circuit configuration as shown in Figure 11, it is possible to determine a pulse position so that the edge shift is small and also the index M is good, by setting the priority order according to the present embodiment. Thus, according to the present embodiment, it is possible to determine the initial condition based on at least one of the edge shift amount and the jitter.

As explained so far, by using a recording method according to the embodiment of the present invention, it is possible to perform an accurate recording even if the shortest mark length is short, by performing a test recording before performing a recording of user data and then performing the recording of the user data under a condition that makes the index M small.

In order to determine the condition for optimizing the pulse position of the 2T mark and the condition for optimizing the pulse position of the 3T mark, a search is made only for a pulse position that is different from the initial condition by one step, so that there is a limitation to the movement of the pulse position. For example, in a case where the initial condition is determined so as to be equal to or smaller than a predetermined jitter, it is possible to determine a pulse position with which jitter degradation is small and also the index M is good by setting the priority order according to the present embodiment. Further, it is also acceptable to search for a pulse position that is different by 2 steps or more by repeatedly performing the searching step. In such a case, it is also acceptable to use a pulse position determined in a step as an initial value for the next step.

Furthermore, in a case where the initial condition is determined as a recording condition with which the output signal from the edge interval measuring circuit **508** is small due to the circuit configuration as shown in Figure 11, it is possible to determine a pulse position so that the edge shift is small and also the index M is good, by setting the priority order according to the present embodiment.

Further, it is acceptable to determine a parameter indicating recording powers (a peak power, a bias power, a bottom power and so on) by performing a test recording.

Additionally, according to the present embodiment, the condition for the pulse position is determined using, as a reference, the magnitude of index M, in other words, the standard deviation $\sigma_{10}$ (see Expression 5) calculated from the eight patterns (see Expression 4); however, it is acceptable to have an arrangement wherein eight patterns are divided into two groups of four patterns each so that the condition for optimizing the pulse position is determined from a standard deviation of each group of the four patterns. To be more specific, in a case where the mark is represented when the value of c (see Expression 4) is 1, Pattern 1, Pattern 2, Pattern 3, and Pattern 4 are related to a mark ending edge, while Pattern 5, Pattern 6, Pattern 7, and Pattern 8 are related to a mark starting edge. It is acceptable to distinguish the starting edge from the ending edge and to optimize an edge having a larger standard deviation with a higher priority in this way. Further, it is also acceptable to optimize an edge in a pattern having a larger standard deviation out of the eight patterns with a higher priority.

For example, in a case where the standard deviation in Pattern 3 is larger than a predetermined value, it means that there is no clear distinction between the case in which a 2T mark is followed by a 3T space and the case in which a 3T mark is followed by a 2T space. Accordingly, in such a case, a recording is performed once again by making the falling position of an ending edge of the 2T mark earlier, or by making the falling position of an ending edge of the 3T mark later, so that whichever having a smaller standard deviation is selected and determined. It should be noted that in a case where it is possible to determine the edge position with a combination of a mark and a space, a recording is performed once again by making the falling position of an ending edge of the 2T mark earlier in a combination where the 2T mark is followed by a 3T space, or by making the falling position of an ending edge of the 3T mark later in a combination of the 3T mark and a 2T space, so that whichever having a smaller standard deviation is selected and determined. Consequently, it is possible to optimize the edge position with a higher precision level.

In a similar way, for example, in a case where the standard deviation in Pattern 5 is larger than a predetermined value, it means that there is no clear distinction between the case in which a space of 3T or more is followed by a 3T mark and the case in which a space of 4T or more is followed by a 2T space. Accordingly, in such a case, a recording is performed once again by making the rising position of a starting edge of the 3T mark earlier, or by making the rising position of a starting edge of the 2T mark later, so that whichever having a smaller standard deviation is selected and determined. In this case also, if it is possible to determine the edge position with a combination of a mark and a space, by making the rising position of a starting edge of the 3T mark earlier in a combination of a space of 3T or more and a 3T mark, or by making the rising position of a starting edge of the 2T mark later in a combination of a space of 4T or more and a 2T space, so that whichever having a smaller standard deviation is selected and determined. Consequently, it is possible to optimize the edge position with a higher precision level.

Further, in the present embodiment, optimum pulse positions are determined for the 3T mark and the 2T mark; however, it is acceptable to determine an optimum pulse position only for the 2T mark. Since 2T marks have the highest frequency level of appearance, by optimizing the pulse positions of 2T marks, it is possible to realize more accurate recording than when conventional techniques are used and to shorten the time required for determining the optimum pulse positions.

According to the present embodiment, the optimum pulse positions for the 3T mark and the 2T mark are determined; however, it is also possible to optimize a pulse position of a 4T mark. By determining an optimum pulse position of a 4T mark, it is possible to perform a more accurate recording. Likewise, in a case where there is some leeway in the time spent for determining optimum pulse positions, it is possible to determine optimum pulse positions for all the marks.

Further, in the present embodiment, explanation is provided for the case where a PR (1, 2, 2, 1) equalization is performed using a code having a minimum polarity reversal interval of 2 as the recording code; however, the present invention is not limited to this example. For example, the embodiment described above may be applied to a case where a recording code has a minimum polarity reversal interval of 2 such as a (1,7) modulation code. It is possible to embody the present invention in a case where a recording code has a minimum polarity reversal interval of 3 such as an 8-16 modulation code used in DVDs, by using a state transition rule with which, due to a PR (1, 2, 2, 1) equalization, six states exist at time k and which limits the possible state transitions into six state at time k+1 to eight possible combinations. Thus, it is possible to apply the present invention to a case where a state transition rule is used which is defined by a recording code having a minimum polarity reversal interval of 3 and an equalization system PR (C0, C1 , C1, C0), or to a case where a state transition rule is used which is defined by a recording code having a minimum polarity reversal interval of 2 or 3 and an equalization system PR (C0, C1, C0), or a case where a state transition rule is used which is defined by a recording code having a minimum polarity reversal interval of 2 or 3 and an equalization system PR (C0 C1, C2, C1, C0). In these examples, C0, C1, and C2 are each an arbitrary positive number.

Thus completes the description of the configuration and the operation of the optical disc apparatus 100 according to an embodiment of the present invention.

In the example shown in Figures **4** and **9,** the optical disc apparatus **100** corresponds to "a recording apparatus for recording information on a recording medium under one recording condition of a plurality of recording conditions"; the optical head **102** and the laser driving circuit **112** correspond to "a first recording means for recording a plurality of test information on the recording medium under the plurality of recording conditions"; the optical head **102,** the laser driving circuit **112,** the recording condition determining means **108,** and the reproducing means **104** correspond to "a second recording means for recording the information on the recording medium under one recording condition of the plurality of recording conditions"; the reliability calculation unit **208** corresponds to "a calculating unit operable to calculate differences between each of a plurality of test signals obtained by reproducing the plurality of test information recorded on the recording medium and at least one desired signal"; and the recording condition determining means **108** corresponds to "a selecting unit operable to select one recording condition of the plurality of recording conditions by referring to the calculated differences".

However, the optical disc apparatus **100** of the present invention is not limited to the configurations shown in Figures **4** and **9.** As long as the functions of the means described above are achieved, any apparatus that has an arbitrary configuration may be included in the scope of the present invention.

For example, as long as it is possible to refer to the differences between each of a plurality of test signals obtained by reproducing the plurality of test information recorded on the recording medium and a desired signal indicating a desired pattern by using the optical disc apparatus **100**, the present invention is not limited to the arrangement wherein the differences are indicated by indexes Ms. It is possible to determine a difference between the patterns of waveforms of test signals and patterns that are estimated in advance by comparing the waveforms of the test signals and the patterns that are estimated in advance and to select a recording condition based on the result of the determination.

Further, the patterns that are estimated in advance are not limited to two patterns. As long as there is at least one pattern that is estimated in advance, it is possible to select a recording condition of a plurality of recording condition by calculating a divergence between said at least one pattern and the test signals.

Furthermore, the patterns that are estimated in advance are not limited to patterns indicating a 2T mark or a 2T space. The patterns may be ones indicating an nT mark or an nT space (where n is a positive integer). Further, the patterns that are estimated in advance may be combinations of a plurality of patterns. For example, the patterns that are estimated in advance may be a combination of a pattern indicating a 2T mark, a pattern indicating a 2T space, and a pattern indicating a 3T mark.

In addition, the patterns that are estimated in advance are not limited to an arrangement wherein these patterns are pre-stored in a storing unit included in an optical disc apparatus. The patterns that are estimated in advance may be generated by an optical disc apparatus after test signals are reproduced. The reason is because the optical disc apparatus knows in advance in what shape the pattern having an ideal shape is.

Additionally, each means described in the embodiment shown in Figures **4** and **9** may be implemented by hardware, or may be implemented by software, or may be implemented by both hardware and software. Regardless of whether each means is implemented by hardware, by software, or by both hardware and software, it is possible to execute the recording process of the present invention with the optical disc apparatus, the recording process including the steps of "recording a plurality of test information on a recording medium under a plurality of recording conditions; "recording the information on the recording medium under one recording condition of the plurality of recording conditions, "calculating differences between each of a plurality of test signals obtained by reproducing the plurality of test information recorded on the recording medium and at least one desired signal" and "selecting one recording condition of the plurality of recording conditions by referring to the calculated differences". As long as it is possible to execute the steps described above, the recording process of the present invention may have any arbitrary procedures.

For example, the optical disc apparatus of the present invention stores therein a recording processing program for having the functions of the optical disc apparatus executed. The recording processing program is able to have the functions of the optical disc apparatus executed.

It is acceptable to have an arrangement wherein such a recording processing program is pre-stored in a storing means included in the optical disc apparatus when the computer is shipped. Alternatively, it is acceptable to have an arrangement wherein such a recording processing program is stored into a storing means after the computer is shipped. For example, it is acceptable to have an arrangement wherein the user downloads such a recording processing program from a specific website on the Internet with or without a fee and installs the downloaded program on the computer. In a case where such a recording processing program is recorded on a computer-readable recording medium such as a flexible disc, a CD-ROM, a DVD-ROM or the like, it is acceptable to have an arrangement wherein an access processing is installed on a computer with the use of an input apparatus (for example, a disc drive apparatus). The recording processing program that has been installed is to be stored in a storing means.

Furthermore, a recording control apparatus (i.e. the shape adjusting unit 206, the maximum likelihood decoding unit **207,** and the reliability calculation unit **208,** and the recording condition determining means **108)** may be manufactured as a single-chip LSI (a semiconductor integrated circuit) or a part of a single-chip LSI. In the case where the recording control apparatus is manufactured as a single-chip LSI, it is possible to make the manufacturing process of the optical disc apparatus easier.

The present invention has been described above with reference to the preferable embodiment of the present invention. However, the present invention should not be construed as being limited to such an embodiment. It should be recognized that the scope of the present invention is only construed by the claims. It should be recognized that those skilled in the art can implement the equivalent scope from the descriptions of the specific preferable embodiment, based on the descriptions of the present invention and common technical knowledge. It is also recognized that the patents, patent applications and documents referred herein are hereby incorporated by reference as if their entirety are described.

INDUSTRIAL APPLICABILITY

The recording method according to the present invention is useful in performing high-density recording on optical discs.

According to the recording method, the recording apparatus, the program and the recording control apparatus of the present invention, differences between a plurality of test signals obtained by reproducing a plurality of test information and a desired signal are calculated, and one recording condition of a plurality of recording conditions is selected. Thus, it is possible to record information on a recording medium under a condition which is close to the condition for the desired signal by merely selecting one recording condition of the plurality of recording conditions, in order to make one recording condition comply with the condition for the desired signal. As a result , it is possible to optimize the recording parameters with a simple circuit configuration.

Further, according to the recording method of the present invention, a test recording is performed before user data is recorded so that the user data is recorded under a condition which makes the PRML error index M smaller. Accordingly, it is possible to perform the recording accurately even if the shortest mark length is short.

Furthermore, according to the recording method of the present invention, a test recording is performed before user data is recorded so that the user data is recorded under a condition which makes the PRML error index M smaller. Accordingly, it is possible to record the data accurately without being affected by variation in quality of optical discs and variation in quality of optical disc apparatuses.

**Claims**

1. A recording method for recording information on a recording medium under one recording condition of a plurality of recording conditions, the recording method comprising the steps of:

   (a) recording a plurality of test information on the recording medium under the plurality of recording conditions; and
   (b) recording the information on the recording medium under one recording condition of the plurality of recording conditions,

   wherein the step (b) includes the steps of:

   (b-1) calculating differences between each of a plurality of test signals obtained by reproducing the plurality of test information recorded on the recording medium and at least one desired signal; and
   (b-2) selecting one recording condition of the plurality of recording conditions by referring to the calculated differences.

2. A recording method according to claim 1, wherein:

   the step (a) includes the steps of:

   (a-1) determining an initial condition; and
   (a-2) determining at least one recording condition based on the initial condition, and

   the plurality of recording conditions include the initial condition and the determined at least one recording condition.

3. A recording method according to claim 1, wherein:

   the step (b-1) includes the steps of:

   obtaining the plurality of test signals by reproducing the plurality of test information from the recording medium;
   performing a maximum likelihood decoding on the plurality of test signals to generate a plurality of two-valued signals indicating a result of the maximum likelihood decoding; and
   calculating a reliability of the result of the maximum likelihood decoding based on the plurality of test signals and the plurality of two-valued signals, and
   the step (b-2) includes the step of:

   selecting one recording condition of the plurality of recording conditions based on a plurality of values indicating the reliability.

4. A recording method according to claim 3, wherein:

   the step (b-2) includes the step of:

   selecting a recording condition corresponding to a smallest value of the plurality of values indicating the reliability, among the plurality of recording conditions.

**5.** A recording method according to claim 1, wherein:

the step (b-1) includes the steps of:

obtaining the plurality of test signals by reproducing the plurality of test information from the recording medium;
generating a plurality of paths based on each of the plurality of test signals; and
calculating a plurality of indexes indicating a reliability of the plurality of test signals based on each of the plurality of test signals and the plurality of paths, and

the step (b-2) includes the step of:

selecting one recording condition of the plurality of recording conditions based on the plurality of indexes.

**6.** A recording method according to claim 5, wherein:

the step (b-2) includes the step of:

selecting a recording condition corresponding to a smallest value of the plurality of the indexes, among the plurality of recording conditions.

**7.** A recording method according to claim 1, wherein:

a priority order for being selected is given to the plurality of recording conditions.

**8.** A recording method according to claim 1, wherein:

the step (b) includes the steps of:

determining relative positions of a plurality of light pulses included in a light beam in accordance with the selected one recording condition; and
forming a plurality of recording marks having predetermined lengths oh the recording medium by irradiating the recording medium with the light beam.

**9.** A recording method according to claim 8, wherein:

the plurality of recording marks having the predetermined lengths include a shortest recording mark.

**10.** A recording method according to claim 8, wherein:

the plurality of recording marks having the predetermined lengths include a recording mark which is the second shortest.

**11.** A recording method according to claim 2, wherein:

the initial condition is recorded on the recording medium when the recording medium is manufactured.

**12.** A recording method according to claim 2, further comprising the step of:

determining a predetermined recording condition based on at least one of an edge shift amount and a jitter, wherein the predetermined recording condition is included in the plurality of recording conditions.

**13.** A recording method according to claim 12, wherein:

the step (a-1) includes the step of:

determining the predetermined recording condition as the initial condition.

**14.** A recording apparatus for recording information on a recording medium under one recording condition of a plurality of recording conditions, the recording apparatus comprising:

a first recording means for recording a plurality of test information on the recording medium under the plurality of recording conditions; and
a second recording means for recording the information on the recording medium under one recording condition of the plurality of recording conditions,
wherein the second recording means includes:

a calculating unit operable to calculate differences between each of a plurality of test signals obtained by reproducing the plurality of test information recorded on the recording medium and at least one desired signal; and
a selecting unit operable to select one recording condition of the plurality of recording conditions by referring to the calculated differences.

15. A program for having a computer execute a recording process for recording information on a recording medium under one recording condition of a plurality of recording conditions,
wherein the recording process comprises the steps of:

(a) recording a plurality of test information on the recording medium under the plurality of recording conditions; and
(b) recording the information on the recording medium under one recording condition of the plurality of recording conditions, and

the step (b) includes the steps of:

(b-1) calculating differences between each of a plurality of test signals obtained by reproducing the plurality of test information recorded on the recording medium and at least one desired signal; and
(b-2) selecting one recoding condition of the plurality of recording conditions by referring to the calculated differences.

16. A recording control apparatus for recording information on a recording medium under one recording condition of a plurality of recording conditions, comprising:

a calculating unit operable to calculate differences between each of a plurality of test signals obtained by reproducing a plurality of test information recorded on the recording medium and at least one desired signal; and
a selecting unit operable to select one recording condition of the plurality of recording conditions by referring to the calculated differences.

# FIG.1

State $(b_{k-2}, b_{k-1}, b_k)$

$b_k/\text{level}_v$

s0 $(0, 0, 0)$

s5 $(1, 0, 0)$

s1 $(0, 0, 1)$

s4 $(1, 1, 0)$

s2 $(0, 1, 1)$

s3 $(1, 1, 1)$

0/0

0/1

1/1

1/2

1/3

0/3

0/4

0/5

1/5

1/6

FIG.2

FIG.3

(a) Distribution of Pa-Pb

(b) Distribution of | Pa-Pb |-Pst

EP 1 679 709 A1

**FIG.4**

- 101
- 102 Optical head
- 103
- 104 Reproducing means
- 105
- 106 Demodulation ECC circuit
- 107
- 108 Recording condition determining means
- 109
- 110 Recording compensation circuit
- 111 Recording power setting means
- 112 Laser driving circuit
- 113

# FIG.5

Groove track 601

Optical disc 101

# FIG.6

**2T**

Ttop(2T)

Pw

dTtop(2T)

Pe

dTe(2T)

Pbw

**3T**

Ttop(3T)

Tmp

Pw

dTtop(3T)

Pe

dTe(3T)

Pbw

Pbw

**4T**

Ttop(>4T)

Tmp

Tmp

Pw

dTtop(>4T)

Pe

dTe(>4T)

Pbw

Pbw

FIG.7

Start

Recording direction

# FIG.8

(a) 3T

(b) 2T

Ttop
dTtop
Larger

dTe Smaller

Initial value

3T

2T (First Time)

2T (Second Time)

**FIG.9**

103 → Preamplifier (201) → HPF (202) → AGC (203) → Waveform equalizer (204) → A/D converter (205) → Shape adjusting unit (206)

Clock 209

Maximum likelihood decoder (207) → Reliability calculation unit (208)

→ 105

→ 107

210

104

EP 1 679 709 A1

# FIG.10

EP 1 679 709 A1

FIG.11

Preamplifier 501 — Equalizer 502 — LPF 503 — Tow-valued circuit 505 — PLL 507

403 504 506 405

Edge interval measuring circuit 508 — Jitter computing circuit 510

509 407

404

EP 1 679 709 A1

FIG.12

FIG. 13

Mark  Space

Slace level

504

506

405

t0  t1  t2  t3  t4  t5  t6  t7  t8  t9

EP 1 679 709 A1

## FIG. 14

Distribution with no error

FIG. 15

Distribution with error

**EP 1 679 709 A1**

<table>
<tr><td colspan="2" style="text-align:center"><strong>INTERNATIONAL SEARCH REPORT</strong></td><td>International application No.<br>PCT/JP2004/016238</td></tr>
</table>

A. CLASSIFICATION OF SUBJECT MATTER
   Int.Cl$^7$ G11B20/18, G11B7/0045

According to International Patent Classification (IPC) or to both national classification and IPC

B. FIELDS SEARCHED

Minimum documentation searched (classification system followed by classification symbols)
   Int.Cl$^7$ G11B20/18, G11B7/0045

Documentation searched other than minimum documentation to the extent that such documents are included in the fields searched
   Jitsuyo Shinan Koho          1922-1996   Toroku Jitsuyo Shinan Koho   1994-2005
   Kokai Jitsuyo Shinan Koho    1971-2005   Jitsuyo Shinan Toroku Koho   1996-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-269744 A (Matsushita Electric Industrial Co., Ltd.), 20 September, 2002 (20.09.02), Par. Nos. [0024] to [0032]; Fig. 1 (Family: none) | 1,2,7,12-16<br>3-6,8-11 |
| Y<br>A | JP 2003-141823 A (Matsushita Electric Industrial Co., Ltd.), 16 May, 2003 (16.05.03), Par. Nos. [0036] to [0081], [0175]; all drawings & US 2003/67998 A1 | 3-6<br>1,2,7-16 |

[X] Further documents are listed in the continuation of Box C.      [ ] See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>27 January, 2005 (27.01.05) | Date of mailing of the international search report<br>15 February, 2005 (15.02.05) |
|---|---|
| Name and mailing address of the ISA/<br>    Japanese Patent Office | Authorized officer |
| Facsimile No. | Telephone No. |

Form PCT/ISA/210 (second sheet) (January 2004)

36

| | **INTERNATIONAL SEARCH REPORT** | International application No. |
|---|---|---|
| | | PCT/JP2004/016238 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | WO 2002/089123 A1 (Matsushita Electric<br>Industrial Co., Ltd.),<br>07 November, 2002 (07.11.02),<br>Page 14, line 10 to page 16, line 6, page 28,<br>lines 15 to 25, page 96, line 1 to page 98,<br>line 14; Figs. 9, 10<br>& US 2003/151994 A1 | 8-11<br>1-7,12-16 |
| A | JP 2003-178448 A (Matsushita Electric<br>Industrial Co., Ltd.),<br>27 June, 2003 (27.06.03),<br>Par. No. [0043]; all drawings<br>& US 2003/81523 A1        & EP 1300836 A2 | 1-16 |

Form PCT/ISA/210 (continuation of second sheet) (January 2004)